# EUROPÄISCHE PATENTSCHRIFT

(11) **EP 3 580 093 B1**
(45) Veröffentlichungstag und Bekanntmachung des Hinweises auf die Patenterteilung: **03.07.2024**
(21) Anmeldenummer: 18710299.1
(22) Anmeldetag: 07.02.2018
(51) Int. Cl.: B60N 2/803, B60N 2/80, B60N 2/70

(54) **KOPFSTÜTZE**
HEAD RESTRAINT
APPUIE-TÊTE

(30) Priorität: 09.02.2017 DE 102017001218; 13.12.2017 DE 102017129831; 13.12.2017 DE 102017129830; 13.12.2017 DE 102017129857
(43) Veröffentlichungstag der Anmeldung: 18.12.2019
(73) Patentinhaber: GRAMMER AG, 92289 Ursensollen (DE)
(72) Erfinder: BÖSL, Manuel, 92272 Freudenberg (DE)
(74) Vertreter: Roche, von Westernhagen & Ehresmann
(86) Internationale Anmeldenummer: PCT/DE2018/000024
(87) Internationale Veröffentlichungsnummer: WO 2018/145686

(56) Entgegenhaltungen:
- WO-A1-2017/005660
- JP-A- 2013 184 488
- US-A1- 2014 217 788

## Beschreibung

Die Erfindung betrifft eine Kopfstütze, insbesondere eine Kopfstütze für einen Fahrzeugsitz.

Eine solche Kopfstütze ist aus offenkundiger Vorbenutzung bekannt. Die Kopfstütze umfasst ein Kopfanlageteil, welches mittels Tragstangen an der Rückenlehne eines Fahrzeugsitzes gehalten ist. Das Kopfanlageteil ist mit einem Polsterschaum und mit einem Bezug aus textilem Material oder Leder versehen. Bei einer Kraft auf eine Kopfanlagefläche des Kopfanlageteils, verformt sich das Polster so dass sowohl bei im Falle der unfallbedingten Anlage, als auch im Falle der willensabhängigen Anlage ein nachgiebiges Abfedern des Kopfes gewährleistet ist.

Die zuvor beschriebene Kopfstütze ist insofern verbesserungswürdig, als die Herstellung der Kopfstütze mit einem nicht unerheblichen Aufwand verbunden ist.

Die WO 2017/005660 A1 offenbart weitere Beispiele aus dem Stand der Technik.

Es war Aufgabe der Erfindung eine Kopfstütze zu schaffen, die einfacher herstellbar ist, die aber vergleichbare oder bessere Abfederungseigenschaften aufweist.

Die Aufgabe wurde gelöst durch eine Kopfstütze mit den Merkmalen des Anspruchs 1.

Die Kopfstütze umfasst ein Kopfanlageteil, welches mit einer Lagervorrichtung an einem Sitz gehalten ist. Die Kopfstütze ist z.B. an einem Fahrzeugsitz gehalten. Fahrzeug kann z.B. im Sinne der Erfindung Land-, Luft oder Wasserfahrzeug bedeuten.

Die Lagervorrichtung kann z.B. eine oder mehrere Tragstangen umfassen. Tragstange kann im Sinne dieser Erfindung auch ein Tragstangenbügel mit wenigstens einem freien Ende, insbesondere mit zwei freien Enden sein.

Die Kopfanlagevorrichtung ist z.B. verstellbar oder alternativ fest relativ zu dem Sitz gelagert. Es kann z.B. eine Höhenverstellung des Kopfanlageteils vorgesehen sein, wobei die Lagervörrichtung relativ zu dem Sitz bewegbar gelagert sein kann oder / und die Kopfanlagevorrichtung relativ zu der Lagervorrichtung gelagert sein kann. Wenn keine Höhenverstellung vorgesehen ist, ist die Kopfanlagevorrichtung relativ zu dem Sitz in vertikaler Richtung unbewegbar angeordnet.

Zusätzlich oder alternativ zu der Höhenverstellung kann eine Horizontalverstellung der Kopfanlagevorrichtung oder eines Bereichs davon vorgesehen sein. Dabei wird die Kopfanlagevorrichtung oder ein Bereich derselben relativ zu dem Sitz in horizontaler Richtung verstellt.

Die Kopfanlagevorrichtung ist z.B. an der Lagervorrichtung gehalten, d.h. befestigt oder daran gelagert. Alternativ kann die Kopfanlagevorrichtung auch einteilig mit der Lagervorrichtung ausgebildet sein.

Die Kopfanlagevorrichtung umfasst einen Kopfanlagebereich mit einer Kopfanlagefläche, welche bei einer einwirkenden Kraft elastisch - z.B. relativ zu einem Basisteil der Kopfanlagevorrichtung - verlagert werden kann und aufgrund der Elastizität eines elastischen Materials des Kopfanlagebereichs wieder in die Ausgangslage zurückbelastet wird. Die Kopfanlagefläche wird z.B. in Richtung der Krafteinwirkung verlagert.

Das elastische Material ist z.B. von einem Kunststoff oder einem Naturstoff, insbesondere von einem Silikon, gebildet. Das Material kann z.B. als elastisches Band oder als rückstellelastischer Schaum ausgebildet sein.

Erfindungsgemäß ist ein Kopfanlageteil vorgesehen. Das Kopfanlageteil kann relativ zu einem Basisteil bewegt werden. Dass Kopfanlageteil kann z.B. zusammen mit dem Basisteil oder alternativ separat hergestellt werden.

Das Kopfanlageteil ist z.B. im Wesentlichen steif ausgebildet. D.h., das Kopfanlageteil ist z.B. von einem biegesteifen Material, wie z.B. von einer biegesteifen Kunststoff- oder Metallplatte gebildet. Das elastische Material wirkt dann derart mit dem Kopfanlageteil zusammen, dass dieses in die Ausgangslage zurückbelastet wird.

Die Kopfanlagefläche ist einem Kopfanlageteil zugeordnet, welches relativ zu dem Basisteil bewegbar ist. D.h. das Kopfanlageteil kann ein völlig separates Teil sein, welches mit dem Basisteil verbunden ist. Alternativ kann das Kopfanlageteil z.B. im Zwei- oder Mehr-Komponenten-Spritzgießverfahren zusammen mit dem Basisteil oder einem Teil des Basisteils hergestellt sein. Auch die Lagervorrichtung kann einteilig mit dem Basisteil und ggf. mit dem Kopfanlageteil hergestellt sein.

Das Kopfanlageteil bildet z.B. mit dem Basisteil eine Fuge, die z.B. als Ringfuge ausgebildet ist. Die Fuge kann die Relativbewegung zwischen dem Kopfanlageteil und dem Basisteil ermöglichen. Darüber hinaus kann die Fuge z.B. das elastisch verformbare Material wenigstens teilweise aufnehmen.

Erfindungsgemäß ist die Bewegung des Kopfanlageteils von zusammenwirkenden Führungsflächen des Kopfanlageteils sowie des Basisteils geführt. Das Kopfanlageteil kann z.B. wenigstens einen Vorsprung aufweisen, der mit der Laibung einer Öffnung des Basisteils zusammenwirkt. Der Vorsprung ist z.B. ein Ringvorsprung. Der Vorsprung und die Laibung bilden dann z.B. die Führungsflächen aus. Auf diese Weise bewegt sich das Kopfanlageteil auf einer definierten Bewegungsbahn. Die Belastung des elastisch verformbaren Materials erfolgt immer in gleicher und vorhersehbarer Weise. Mit anderen Worten eine beliebige unbestimmbare Bewegung des Kopfanlageteils sowie eine nicht vorhersehbare Verformung des elastischen Materials tritt nicht auf.

Die Bewegung des Kopfanlageteils relativ zu dem Basisteil ist erfindungsgemäß von einem Anschlag begrenzt. Der Anschlag umfasst wenigstens eine Anschlagfläche des Basisteils sowie mindestens eine Kontaktfläche des Kopfanlageteils. Auf diese Weise kann das elastische Material nicht überbelastet werden, so dass z.B. aufgrund einer plastischen Verformung, keine Rückstellung mehr erfolgt.

Erfindungsgemäß ist das elastische Element zwischen dem Kopfanlageteil und dem Basisteil ausgebildet. Die Verbindung ist z.B. an dem Kopfanlageteil und an dem Basisteil befestigt. Die Verbindung kann an dem Kopfanlageteil und / oder an dem Basisteil angeformt sein. Alternativ kann z.B. die Verbindung an dem Kopfanlageteil und / oder an dem Basisteil angeschweißt oder angeklebt sein.

Z.B. bilden eine Mehrzahl von elastischen Elementen aus einem oder aus unterschiedlichen elastischen Materialien die elastische Verbindung. Die Einzelfedern sind z.B. über die Ringfuge verteilt angeordnet. Das gewährleistet eine gleichmäßige Verlagerung des Kopfanlageteils.

Das elastische Element ist gemäß einer Ausführungsform ringförmig ausgebildet. Auf diese Weise können große Federkräfte erzeugt werden.

Gemäß einer Ausführungsform ist die Kopfanlagevorrichtung einteilig im Mehrkomponenten-Spritzgießverfahren hergestellt. Eine Komponente bildet z.B. das Basisteil sowie das Kopfanlageteil und eine zweite Komponente bildet das elastische Element. Gemäß einer alternativen Ausführung sind das Basisteil und das Kopfanlageteil von unterschiedlichen Komponenten gebildet und das elastische Element ist von einer weiteren Komponente gebildet.

Weitere Vorteile der Erfindung ergeben sich anhand eines in den schematischen Fig. dargestellten Ausführungsbeispiels. Es zeigen:
Fig. 1 eine perspektivische Darstellung einer Kopfstütze von vorne,
Fig. 2 eine Frontdarstellung der Kopfstütze,
Fig. 3 eine Seitenansicht gemäß Ansichtspfeil III in Fig. 2,
Fig. 4 eine Rückansicht der Kopfstütze gemäß Ansichtspfeil IV in Fig. 3,
Fig. 5 eine Schnittansicht gemäß Schnittlinie V - V in Fig. 2,
Fig. 6 eine vergrößerte Darstellung der Kopfanlagevorrichtung gemäß Fig. 5, wobei eine Kopfanlagefläche unbelastet ist,
Fig. 7 in Anlehnung an Fig. 6 das Kopfanlageteil, wobei die Kopfanlagefläche belastet ist.

Die Kopfstütze insgesamt ist in den Zeichnungen mit dem Bezugszeichen 10 bezeichnet. Gleiche Bezugszeichen in den unterschiedlichen Fig. bezeichnen entsprechende Teile, auch wenn kleine Buchstaben nachgestellt oder weggelassen sind.

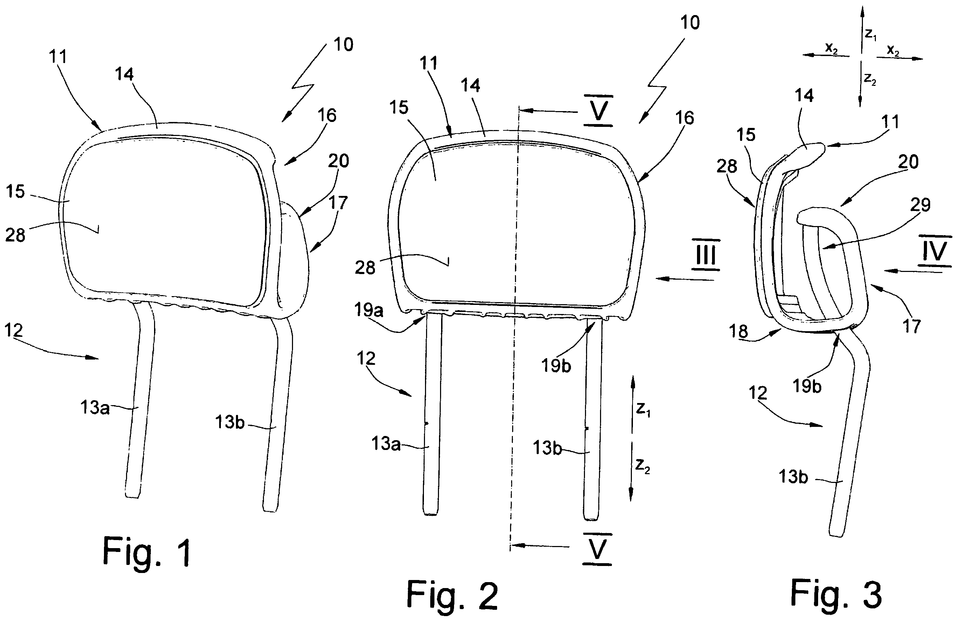

In Fig. 1 ist eine perspektivische Ansicht einer erfindungsgemäßen Kopfstütze 10 dargestellt. Die Kopfstütze 10 umfasst eine Kopfanlagevorrichtung 11 sowie eine Lagervorrichtung 12, die Tragstangen 13a und 13b umfasst. Die Tragstangen 13a und 13b sind im vorliegenden Ausführungsbeispiel Einzeltragstangen. Alternativ könnten es aber freie Enden eines Tragstangenbügels sein. Die Kopfanlagevorrichtung 11 umfasst ein Basisteil 14 sowie ein Kopfanlageteil 15. Das Kopfanlageteil 15 umfasst eine Kopfanlagefläche 28, es dient als Widerlager für den Kopf eines Sitzinsassen.

Die freien Enden der Tragstangen 13a und 13b sind in Lageraufnahmen lagerbar, die fest mit einem Sitz, insbesondere einem Fahrzeugsitz verbunden sind. In diesem Ausführungsbeispiel sind die Tragstangen 13a und 13b relativ zu den nicht dargestellten Lageraufnahmen in die Richtungen z1 und z2 bewegbar (siehe Fig. 2).

Das Basisteil 14 umfasst im vorliegenden Ausführungsbeispiel einen ersten freien Endbereich 16, an welchem das Kopfanlageteil 15 angeordnet ist, sowie einen Lagerbereich 17. In einem unteren Bereich 18 weist der etwa C-förmige Lagerbereich des Basisteils 14 in einen etwa horizontalen Abschnitt auf, in welchem Öffnungen 19a und 19b ausgebildet sind. Die Öffnung 19a ist von der Tragstange 13a und die Öffnung 19b von der Tragstange 13b durchgriffen. Die Tragstangen 13a und 13b verlaufen bis zu einem horizontalen Abschnitt eines zweiten freien Endbereichs 20 des Basisteils 14 und sind an dem horizontalen Abschnitt befestigt.

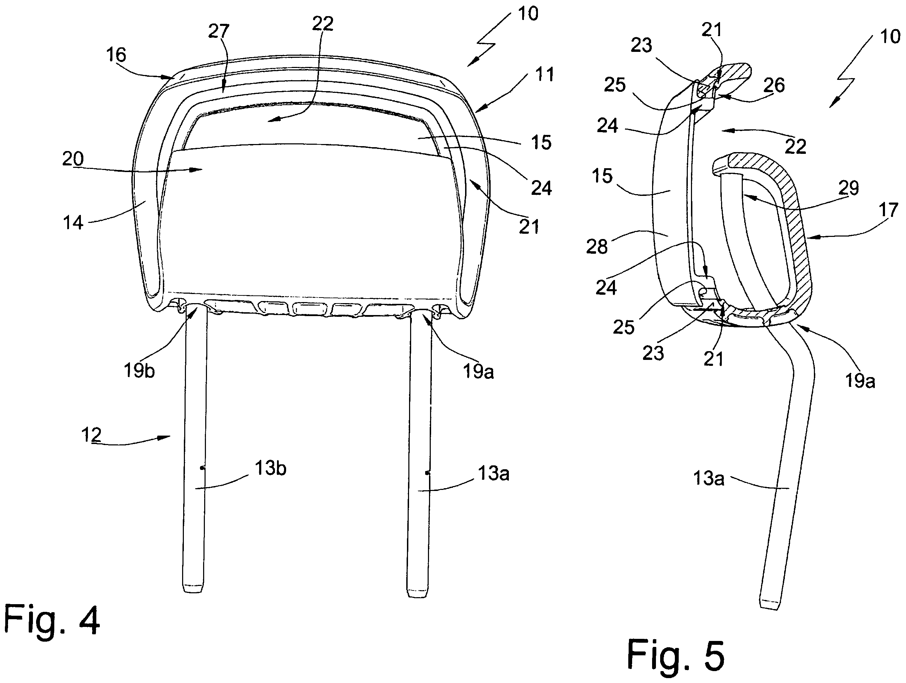

Wie z.B. in Fig. 5 zu erkennen, umfasst das Basisteil 14 einen Ringsteg 21, welcher die Laibung zu einer Öffnung 22 bildet. Das Basisteil 14 bildet somit einen Rahmen aus. Darüber hinaus stellt der Ringsteg 21 eine Anschlagfläche 23 bereit, die als Anschlag für das Basisteil 14 dient. Das Kopfanlageteil 15 bildet einen Ringvorsprung 24 und dazu benachbart eine Kontaktfläche 25 aus. Zwischen dem Ringsteg 21 und dem Ringvorsprung 24 ist eine Fuge 26 ausgebildet. In der Fuge 26 ist ein elastisches Element 27 angeordnet, das von einem elastischen Material gebildet ist und sowohl an dem Ringsteg 21, als auch an dem Ringvorsprung 24 befestigt ist. Das elastische Element 27 ist z.B. von einem Silikonkautschuk gebildet. Alternativ könnten auch andere elastische Materialien als elastisches Element verwendet werden.

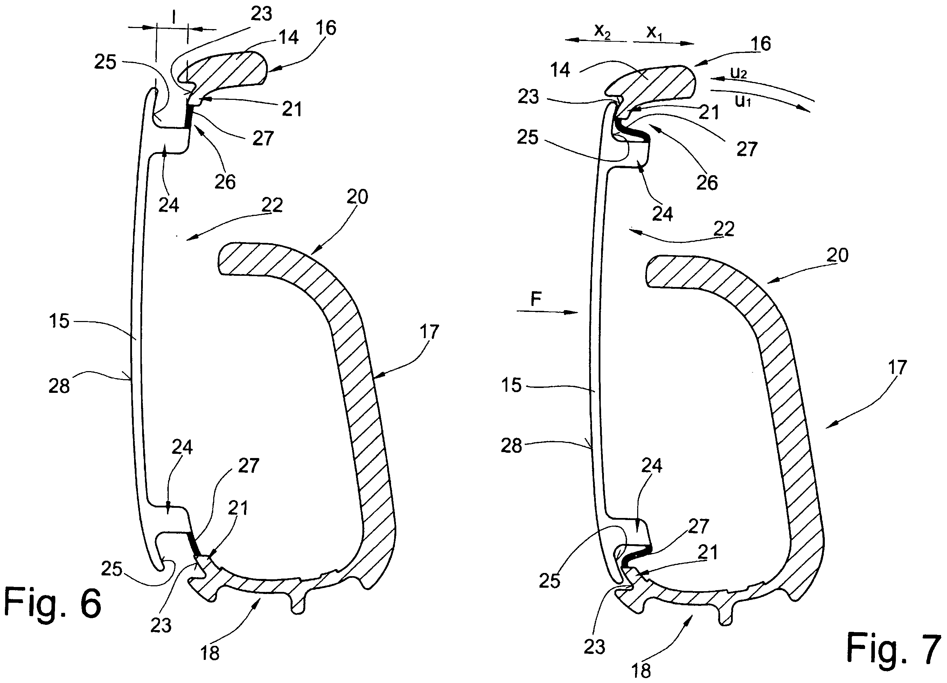

In den Fig. 6 und 7 ist die Kopfanlagevorrichtung 11 ohne die Tragstangen 13a und 13b als Schnittansicht gezeigt, wobei auf das Kopfanlageteil 15 in Fig. 6 keine Belastung einwirkt. Es ist zu erkennen, dass das elastisches Element 27 entspannt und unverformt ist. Die Anschlagfläche 23 und die Kontaktfläche 25 weisen einen Abstand I voneinander auf.

Im Falle einer auf eine Kopfanlagefläche 28 des Kopfanlageteils 15 wirkenden Kraft F (siehe Fig. 7) wird das Kopfanlageteil 15 in Richtung x1 verlagert, wobei sich das elastische Element 27 elastisch verformt. Das Kopfanlageteil 15 kann maximal um einen Weg I in Richtung x1 bewegt werden. Dann geraten die Anschlagfläche 23 und die Kontaktfläche 25 in Kontakt und eine weitere Bewegung des Kopfanlageteils 15 relativ zu dem Basisteil 14 in Richtung x1 wird verhindert. Bei einer großen Kraft F kann aber zusätzlich zu dieser Relativbewegung der freie Endbereich 16 aus der in den Fig. dargestellten Position elastisch in Richtung u1 schwenken.

Nach der Entlastung des Kopfanlageteils 15 schwenkt der freie Endbereich 16 aufgrund der Rückstellelastizität des Werkstoffs des Basisteils 14 wieder in Richtung u2 in seine Ausgangslage zurück und das Kopfanlageteil 15 bewegt sich unter der elastischen Rückstellkraft des elastischen Elements 27 relativ zu dem Basisteil 14 in Richtung x2, wobei sich das elastische Element 27 entspannt.

Die Herstellung der Kopfanlagevorrichtung 11 erfolgt z.B. im Zwei- oder Mehrkomponenten-Spritzgießverfahren, wobei eine einteilige Kopfanlagevorrichtung erzeugt wird. Alternativ können das Basisteil 14 und das Kopfanlageteil 15 separat erzeugt werden. Das elastische Element wird dann sowohl an dem Basisteil 14, als auch an dem Kopfanlageteil 15 befestigt. Die Befestigung kann z.B. durch Kleben erfolgen.

Anschließend wird die Kopfanlagevorrichtung 11 an den Tragstangen 13a und 13b montiert. Ein oberes Tragstangenende 29 jeder Tragstange 13a und 13b wird fest mit dem Endbereich 20 des Basisteils 14 verbunden.

## Patentansprüche

1. Kopfstütze mit einer Kopfanlagevorrichtung (11), welche mit einer Lagervorrichtung (12) verstellbar oder fest an einem Sitz gelagert ist, wobei die Kopfanlagevorrichtung (11) ein Basisteil (14) sowie ein Kopfanlageteil (15) mit einer Kopfanlagefläche (28) umfasst, die bei einer auf die Kopfanlagefläche (28) wirkenden Kraft (F) verlagerbar ist und von wenigstens einem elastischen Element (27) in die Ausgangslage zurückbelastet ist, wobei das Basisteil (14) einen Rahmen ausbildet und das Kopfanlageteil (15) relativ zu dem Basisteil (14) bewegbar ist, **dadurch gekennzeichnet,** wobei die Bewegung des Kopfanlageteils von zusammenwirkenden Führungsflächen des Kopfanlageteils (15) sowie des Basisteils (14) geführt ist, wobei die Bewegung von dem Kontakt einer Kontaktfläche (25) des Kopfanlageteils (15) mit einer Anschlagfläche (23) des Basisteils (14) begrenzt ist, und dass zwischen dem Basisteil (14) und dem Kopfanlageteil (15) wenigstens ein elastisches Element (27) angeordnet ist, welches bei Verlagerung des Kopfanlageteils (15) relativ zu dem Basisteil (14) elastisch verformt wird und eine Rückstellkraft auf das Kopfanlageteil (15) ausübt.

2. Kopfstütze nach Anspruch 1, **dadurch gekennzeichnet, dass** die Kopfanlagefläche (28) wenigstens einem Kopfanlageteil (15) zugeordnet ist.

3. Kopfstütze nach Anspruch 2, **dadurch gekennzeichnet, dass** das Kopfanlageteil (15) im Wesentlichen steif ausgebildet ist.

4. Kopfstütze nach einem der Ansprüche 2 oder 3, **dadurch gekennzeichnet, dass** das Kopfanlageteil (15) mit der Laibung einer Öffnung (22) des Basisteils (14) eine Fuge (26) bildet, wobei das Kopfanlageteil (15) relativ zu dem Basisteil (14) in etwa horizontale Richtungen (x1, x2) bewegbar ist.

5. Kopfstütze nach einem der vorangehenden Ansprüche, **dadurch gekennzeichnet, dass** eine Mehrzahl von elastischen Elementen (27) aus einem oder aus unterschiedlichen elastischen Materialien vorgesehen sind.

6. Kopfstütze nach einem der vorangehenden Ansprüche, **dadurch gekennzeichnet, dass** das elastische Element (27) ringförmig an dem Kopfanlageteil gehalten ist.

7. Kopfstütze nach einem der vorangehenden Ansprüche, **dadurch gekennzeichnet, dass** das elastische Element von einem Kunststoff, insbesondere von einem Silikon-Kunststoff oder von einem Naturwerkstoff gebildet ist.

8. Kopfstütze nach einem der vorangehenden Ansprüche, **dadurch gekennzeichnet, dass** die Kopfanlagevorrichtung (11) einteilig im Mehrkomponenten-Spritzgießverfahren hergestellt ist.

## Claims

1. Headrest having a head support apparatus (11), which is can be adjusted with a bearing device (12) or is firmly mounted on a seat, wherein the head support apparatus (11) comprises a base part (14) and a head support part (15) with a head support surface (28), which can be displaced in the event of a force (F) acting upon the head support surface (28) and is loaded back into the starting position by at least one elastic element (27), wherein the base part (14) forms a frame and the head support part (15) can be moved in relation to the base part (14), **characterised in that** wherein the movement of the head support part is guided by cooperating guide surfaces of the head support part (15) and of the base part (14), wherein the movement is restricted by the contact of a contact surface (25) of the head support part (15) with an abutment surface (23) of the base part (14), and that at least one elastic element (27) is arranged between the base part (14) and the head support part (15), which is elastically deformed during displacement of the head support part (15) in relation to the base part (14) and exerts a restoring force onto the head support part (15).

2. Head rest according to claim 1, **characterised in that** the head support surface (28) is assigned to at least one head support part (15).

3. Head rest according to claim 2, **characterised in that** the head support part (15) is formed to be substantially rigid.

4. Head rest according to one of claims 2 or 3, **characterised in that** the head support part (15) forms a joint (26) with the embrasure of an opening (22) of the base part (14), wherein the head support part (15) can be moved in relation to the base part (14) in approximately horizontal directions (x1, x2).

5. Head rest according to one of the preceding claims, **characterised in that** a plurality of elastic elements (27) consisting of one or different elastic materials are provided.

6. Head rest according to one of the preceding claims, **characterised in that** the elastic element (27) is held in a ring-shape on the head support part.

7. Head rest according to one of the preceding claims, **characterised in that** the elastic element is formed from a plastic, in particular from a silicone plastic or from a natural material.

8. Head rest according to one of the preceding claims, **characterised in that** the head support apparatus (11) is produced as one-piece in the multicomponent injection moulding process.

## Revendications

1. Appuie-tête comprenant un dispositif d'appui pour la tête (11) qui est monté sur un siège de manière réglable ou de manière fixe au moyen d'un dispositif de support (12), dans lequel le dispositif d'appui pour la tête (11) comprend une partie de base (14) ainsi qu'une partie d'appui pour la tête (15) avec une surface d'appui pour la tête (28) déplaçable sous l'effet d'une force (F) appliquée sur la surface d'appui pour la tête (28) et qui est contrainte vers la position initiale par au moins un élément élastique (27), dans lequel la partie de base (14) forme un cadre et la partie d'appui pour la tête (15) est mobile par rapport à la partie de base (14), **caractérisé en ce que** le mouvement de la partie d'appui pour la tête est guidé par des surfaces de guidage coopérantes de la partie d'appui pour la tête (15) ainsi que de la partie de base (14), **en ce que** le mouvement est limité par le contact d'une surface de contact (25) de la partie d'appui pour la tête (15) avec une surface de butée (23) de la partie de base (14), et **en ce qu'**est agencé entre la partie de base (14) et la partie d'appui pour la tête (15) au moins un élément élastique (27) qui, lors du déplacement de la partie d'appui pour la tête (15) par rapport à la partie de base (14), est déformé élastiquement et exerce une force de rappel sur la partie d'appui pour la tête (15).

2. Appuie-tête selon la revendication 1, **caractérisé en ce que** la surface d'appui pour la tête (28) est associée à au moins une partie d'appui pour la tête (15).

3. Appuie-tête selon la revendication 2, **caractérisé en ce que** la partie d'appui pour la tête (15) est conçue sensiblement rigide.

4. Appuie-tête selon l'une quelconque des revendications 2 ou 3, **caractérisé en ce que** la partie d'appui pour la tête (15) forme une jonction (26) avec l'embrasure d'une ouverture (22) de la partie de base (14), la partie d'appui pour la tête (15) étant mobile par rapport à la partie de base (14) dans des directions (x1, x2) sensiblement horizontales.

5. Appuie-tête selon l'une quelconque des revendications précédentes, **caractérisé en ce qu'**une pluralité d'éléments élastiques (27), en un seul matériau élastique ou en différents matériaux élastiques, est prévue.

6. Appuie-tête selon l'une quelconque des revendications précédentes, **caractérisé en ce que** l'élément élastique (27) est maintenu en forme d'anneau sur la partie d'appui pour la tête.

7. Appuie-tête selon l'une quelconque des revendications précédentes, **caractérisé en ce que** l'élément élastique est formé à partir d'un plastique, en particulier d'un plastique à base de silicone ou d'un matériau naturel.

8. Appuie-tête selon l'une quelconque des revendications précédentes, **caractérisé en ce que** le dispositif d'appui pour la tête (11) est fabriqué d'un seul tenant par un procédé de moulage par injection à composants multiples.
